## Europäisches Patentamt
## European Patent Office
## Office européen des brevets

(19)

(11) Veröffentlichungsnummer : **0 131 010**
**B1**

(12) **EUROPÄISCHE PATENTSCHRIFT**

(45) Veröffentlichungstag der Patentschrift :
03.12.86

(51) Int. Cl.⁴ : **C 09 C  1/00, D 21 H  3/78,
D 21 H  5/18**

(21) Anmeldenummer : 84900275.3

(22) Anmeldetag : 30.12.83

(86) Internationale Anmeldenummer :
PCT/DE 83/00226

(87) Internationale Veröffentlichungsnummer :
WO/8402710 (19.07.84 Gazette 84/17)

(54) FÜLLSTOFF FÜR EINEN PAPIER-, KARTON ODER PAPPENARTIGEN WERKSTOFF.

(30) Priorität : 30.12.82 DE 3248666
         24.02.83 DE 3306478

(43) Veröffentlichungstag der Anmeldung :
16.01.85 Patentblatt 85/03

(45) Bekanntmachung des Hinweises auf die Patenterteilung : 03.12.86 Patentblatt 86/49

(84) Benannte Vertragsstaaten :
AT BE CH DE FR GB LI LU NL SE

(56) Entgegenhaltungen :
EP-A- 0 017 793
DE-A- 2 162 920
DE-A- 2 752 367
DE-A- 2 829 692
DE-A- 3 031 200
DE-B- 2 738 415
GB-A- 1 385 810
US-A- 2 191 575
US-A- 2 224 520
US-A- 2 368 635
US-A- 3 783 096

(73) Patentinhaber : Lüchtrath, Bern
Ebertsklinge 22
D-8700 Würzburg (DE)

(72) Erfinder : WEIGL, Josef
Riederstrasse 31
8000 München 50 (DE)
Erfinder : ZEUNER, Manfred
Angerstrasse 3
D-839 Passau (DE)
Erfinder : LÜCHTRATH, Bern
Ebertsklinge 22
8700 Würzburg (DE)

(74) Vertreter : Pätzold, Herbert, Dr.-Ing.
Widenmayerstrasse 49
D-8000 München 22 (DE)

**Beschreibung**

Die Erfindung betrifft einen Füllstoff für einen papier-, karton- oder pappenartigen Werkstoff, hergestellt durch Blattbildung aus einer wässrigen, faserhaltigen Stoffaufschlämmung und Entwässerung der Stoffaufschlämmung auf einem Sieb mit anschließender Trocknung, wobei die Gefügefestigkeit eines Blattes abhängig ist von Wasserstoffbrücken, die sich bei der Entwässerung zwischen den einzelnen Fasern bilden.

Die Bedeutung von anorganischen Füllstoffen im Hinblick auf bestimmte Papier-, Karton- oder Pappenqualitäten wie z. B. Weißgrad, Glätte, Opazität und Bedruckbarkeit sind bekannt.

Die Gefügefestigkeit von papier-, karton- oder pappenartigen Werkstoffen ist bekanntlich abhängig von der Anzahl der Wasserstoffbrücken zwischen den faserartigen Trägerstoffen des Werkstoffes, die sich beim Entwässern der Stoffaufschlämmung bilden. Dabei verringert sich allerdings die Gefügefestigkeit des Werkstoffes mit steigendem Füllstoffgehalt, da die herkömmlichen anorganischen Füllstoffe die Ausbildung von Wasserstoffbrücken zwischen den Fasern blockieren oder behindern.

Bei herkömmlichen, leicht brennbaren papier-, karton- und pappenartigen Werkstoffen mit Cellulosefasern als Trägermaterial bilden sich Wasserstoffbrücken zwischen Hydroxylgruppen an den Oberflächen der Cellulosefasern aus. Zwischen anorganischen Fasern bilden sich dagegen keine Wasserstoffbrücken aus. Es sind daher Festigkeits- und/oder Vernetzungshilfsmittel (organische Polyelektrolyte) notwendig, die sich wenigstens stellenweise adsorptiv an den anorganischen Faseroberflächen anlagern, um dadurch gecoatete, aktivierte Faserstellen zu bilden, zwischen denen sich bei der Entwässerung der Stoffaufschlämmung zur Bindung der anorganischen Fasern, vergleichbar wie bei den Cellulosefasern, Wasserstoffbrücken ausbilden.

Es ist grundsätzlich bekannt (siehe DE-B-27 38 415), bei der Papierherstellung als Füllstoff Calciumsulfatfasern zu verwenden, die eine stark verringerte Löslichkeit in Wasser aufweisen. Hierzu sind die Calciumsulfatfasern mit anorganischen Überzügen aus schwerlöslichen, festhaftenden Verbindungen versehen, deren Gewichtsanteil 0,5 bis 10 Gew.-% der überzogenen Faser beträgt.

Aufgabe der Erfindung ist es, einen Füllstoff der eingangs genannten Art anzugeben, der aufgrund seiner besonderen Eigenschaften die Gefügefestigkeit des blattförmigen Werkstoffes weder blockiert noch behindert, sondern im Gegenteil zu den bekannten Füllstoffen die Gefügefestigkeit unterstützt oder positiv beeinflußt. Durch eine bestimmte Füllstoffkombination sollen sich in Abhängigkeit von der Wahl der einzelnen Füllstoffanteile die jeweils gewünschten Papier-, Karton- und Pappenqualitäten einstellen lassen.

Die Aufgabe wird erfindungsgemäß dadurch gelöst, daß der Füllstoff aus kristallinem Calciumsilikat verschiedener Hydratisationsstufen mit Wasserstoffbrückenbindungsfähigkeit und faser- oder nadelförmig kristallisiertem Calciumsulfat-Anhydrit oder Calciumsulfat-Dihydrat besteht.

Die Aufgabe wird erfindungsgemäß auch dadurch gelöst, daß der Füllstoff aus kristallinem Calciumsilikat verschiedener Hydratisationsstufen mit Wasserstoffbrückenbindungsfähigkeit und wenigstens einem aufweitbaren, quellfähigen Schichtsilikat der Gruppe der Smecite, Vermiculite, Illite besteht.

Vorteilhafte Ausführungen nach der Erfindung ergeben sich aus den Merkmalen der Unteransprüche.

Der erfindungsgemäße Füllstoff weist eine besondere Affinität zu organischen und zu gecoateten, aktivierten anorganischen Fasern mit Wasserstoffbrückenbindungsfähigkeit auf und unterscheidet sich damit wesentlich von herkömmlichen Füllstoffen, wie z. B. Talkum, Kaolin, Gips, Schwerspat, Kreide, Magnesit, Dolomit, Titanweiß, Zinkspat, Zinkweiß. Mittels Festigkeits- und/oder Vernetzungshilfsmitteln (organischen Polyelektrolyten) lassen sich anorganische Fasern wenigstens stellenweise coaten und damit aktivieren, um sie zur Bindung von Wasserstoffbrücken zu befähigen.

Kristallines, insbesondere xonotlitisches Calciumhydrosilikat wird vorteilhafterweise synthetisch im Hydrothermalprozeß hergestellt und besitzt im wesentlichen die Formel $6CaO \cdot 6SiO_2 \cdot nH_2O$ bzw. $Ca_6 [(OH)Si_6O_{17}] \cdot nH_2O$.

So läßt sich Calciumhydrosilikat bekanntlich durch eine Direkt-Synthese aus Kalk und Kieselsäure unter bestimmten Mineralisationsbedingungen durch Fällungsprozesse oder aus Kalk und Quarzsand mit Wasser unter Druck bei hohen Temperaturen herstellen, wobei die Mengenverhältnisse gemäß dem gewünschten Endprodukt variiert werden können und dabei auch verschiedene Hydratisationsstufen erzielt werden können, um Restfeuchtigkeiten von 2 bis etwa 50 Gew.-% sicherstellen zu können. Unterschiedliche Restfeuchtigkeiten der kristallinen synthetischen Calciumhydrosilikate werden bei der Herstellung durch verschiedene Hydratisationsstufen erhalten.

Überraschenderweise zeigte es sich, daß ein Xonotlit mit einer minimalen Restfeuchte etwa entsprechend der Formel $6CaO \cdot 6SiO_2 \cdot H_2O$ bzw. $CaO \cdot SiO_2 \cdot 0,2H_2O$ keine Wasserstoffbrückenbindungsfähigkeit besitzt. Das hängt wahrscheinlich damit zusammen, daß an der Oberfläche der Xonotlit-Kristalle weigehend Siloxangruppen und nur vereinzelte Silanolgruppen vorhanden sind. Je höher der Wassergehalt des synthetischen Xonotlits ist um so größer ist jedoch der Anteil der Silanolgruppen, die sich an den Xonotlit-Kristalloberflächen ausbilden können und die befähigt sind Wasserstoffbrücken zu binden.

Erfinderseits wurde also besonders erkannt, daß solche synthetischen kristallinen Calciumsilikate verschiedener Hydratisationsstufen bevorzugt als Füllstoffe mit Wasserstoffbrückenbindungsfähigkeit im aufgabengemäßen Sinne verwendbar sind, die eine relativ hohe Restfeuchtigkeit vorzugsweise von 2 Gew.-% bis etwa 50 Gew.-% $H_2O$ vorzugsweise um 40 bis 50 Gew.-% $H_2O$ besitzen.

Xonotlitische Calciumhydrosilikate besitzen eine hohe spezifische Oberfläche und enthalten weniger als 1 % an freier kristalliner Kieselsäure.

Auch unter definierten Trocknungsbedindungen lassen sich kristalline Calciumhydrosilikate mit Restfeuchten von 2 Gew.-% bis etwa 50 Gew.-% einstellen. Mittels Differentialthermoanalyse und Differentialthermogravimetrie zeigen sich Veränderungen bei xonotlitischen Calciumhydrosilikat im Temperaturbereich oberhalb 500 °C, die durch Umwandlung von einer Xonotlit-Struktur zur Wollastonit-Struktur erklärt werden können.

Synthetische, kristalline Calciumhydrosilikate mit hohen Restfeuchtigkeiten besitzen kurze Alterungsfähigkeit bei Zutritt von Luft. Das hängt wahrscheinlich damit zusammen, daß sich beim Zutritt von $CO_2$ aus der Luft an den Oberflächen der wasserreichen Calciumhydrosilikate Karbonate bilden, die die Wasserstoffbrückenbindungsfähigkeit vereiteln also wahrscheinlich die vorhandenen Silanolgruppen blockieren. Es zeigte sich, daß ein Xonotlit mit einer Restfeuchte von etwa 42 % $H_2O$ seine guten Wasserstoffbrückenbindungsfähigkeit bei einer Lagerzeit von 1 Woche wesentlich eingebüßt hatte. Außer der oberflächlichen Karbonatisierung kann das auch damit zusammenhängen, daß bei einer längeren Lagerung von synthetischen kristallinen Calciumhydrosilikat mit hohem Wassergehalt, Wasser abgeschieden wird. Wichtig ist dabei, daß es sich um originäre Wassergehalte handelt. Xonotlit mit niedrigen Wassergehalten, der keine Wasserstoffbrückenbindungsfähigkeit besitzt, erhält diese nicht dadurch, daß man ihn in einer wässrigen Trübe ansetzt und dort längere Zeit rührt.

Faser- bzw. nadelförmig kristallisiertes Calciumsulfat-Anhydrit oder Calciumsulfat-Dihydrat sind auch unter dem Namen Calciumsulfat-Whisker bekannt, wobei das Verhältnis von Länge zu mittlerem Durchmesser der einzelnen nicht zu bündeln oder zu sternförmigen Aggregaten zusammengewachsenen Kristallite mindestens 6 : 1 beträgt.

Es ist besonders vorteilhaft, wenn die erfindungsgemäße Füllstoffkombination aus im Hydrothermalprozeß hergestellten xonotlitischen Calciumhydrosilikat und Calciumsulfat-Whisker besteht.

Von den Schichtsilikaten wird bevorzugt Montmorillonit verwendet, der in Bentonitlagerstätten angetroffen wird ; besonders vorteilhafte Ergebnisse werden dann erzielt, wenn der Prozentsatz des eingesetzten Schichtsilikats kleiner als 2 Gew.-%, vorzugsweise um 1 Gew.-% bezogen auf die Feststoffeinwaage des Füllstoffes ist.

Wegen der besonders großen Oberfläche der gequollenen Schichtsilikate, lassen sich diese mit Festigkeits- und/oder Vernetzungshilfsmitteln (organischen Polyelektrolyten) leicht coaten, um dadurch Wasserstoffbrücken binden zu können. Derart gecoatete, aktivierte Schichtsilikate haben eine besondere Affinität zu organischen oder gecoateten, aktivierten anorganischen Fasern mit Wasserstoffbrückenbindungsfähigkeit sowie zu kristallinem, insbesondere xonotlitischen Calciumhydrosilikat, das seinerseits auf charakteristische Weise über eine Wasserstoffbrückenbindungsfähigkeit verfügt. Die erfindungsgemäßen Füllstoffkombinationen aus kristallinem Calciumhydrosilikat und einem relativ geringem Anteil insbesondere eines smectitischen Schichtsilikats auch mit Zusätzen an Calciumsulfat-Whisker sind zur Bindung von Wasserstoffbrücken besonders vorteilhaft und lassen sich daher in die Wasserstoffbrücken zwischen organischen oder gecoateten, aktivierten anorganischen Fasern einbinden, um die Gefügefestigkeit zwischen den Fasern, den Fasern und den Füllstoffen und zwischen den Füllstoffen zu erhöhen oder zu unterstützen.

Ein Verfahren zur Herstellung eines papier-, karton- oder pappenartigen Werkstoffes der eingangs genannten Art in Verbindung mit der erfindungsgemäßen Füllstoffkombination besteht darin, daß der wässrigen Füllstoff-Slurry in Wasser dispergiertes vorgequollenes Schichtsilikatmaterial zugegeben und die gesamte Füllstoff-Slurry zusammen mit dem vorgequollenen Schichtsilikatmaterial der Faserstoffaufschlämmung zugeleitet wird.

Mit der erfindungsgemäßen Füllstoffkombination lassen sich auch bei anorganischen Papieren besondere Papierqualitäten durch Variation der einzelnen Füllstoffanteile einstellen, ohne daß der eingesetzte Füllstoff für die Fasern ein Bindungshemmer wie die bekannten Füllstoffe ist.

Die vorteilhaften Eigenschaften des erfindungsgemäßen Füllstoffes kommen auch dann wirksam zur Geltung, wenn die Fasern wenigstens teilweise aus synthetischen, im Hydrothermalprozeß hergestellten Magnesium-Aluminium-silikatfasern bestehen. Solche Silikatfasern können im Mittel aus 45 % $SiO_2$, 20 % $CaO$, 15 % $MgO$, 12 % $Al_2O_3$, 3 % $NaO$, 5 % $Fe$ bestehen und können eine Länge von 1 bis 5 mm bei einem mittleren Durchmesser von 3 bis 5 μm aufweisen. Ein bekanntes Verfahren zur Herstellung solcher Silikatfasern ist in der DE-OS 28 29 692 offenbart.

Die anorganischen Fasern können mit Vorteil auch Glasfasern enthalten. Dabei können die Glasfasern eine Länge von 3 bis 12 mm, vorzugsweise 3 bis 6 mm und einen mittleren Durchmesser von 10 bis 15 μm, vorzugsweise 12 bis 13 μm aufweisen. Vorzugsweise weisen die Glasfasern eine größere Länge auf als die im Hydrothermalprozeß hergestellten Magnesium-Aluminiumsilikatfasern.

Nach der Erfindung lassen sich damit vor allem auch nicht brennbare oder schwer entflammbare Papiere, Kartons und Pappen angeben bzw. herstellen, die ausschließlich oder überwiegend aus anorganischen Fasern und wenigstens einem erfindungsgemäßen anorganischen Füllstoff bestehen, der eine auffällige Affinität zu den aktivierten, gecoateten anorganischen Fasern aufweist und sich dabei — Dank seiner besonderen Fähigkeit, Wasserstoffbrücken zu binden — vorteilhafterweise in die Wasserstoffbrücken zwischen aktivierten anorganischen Fasern einbinden läßt und auch unter sich Wasserstoffbrücken bindet, um dadurch die Gefügefestigkeit der Fasern zu unterstützen oder wenigstens positiv zu beeinflussen.

Nach der deutschen Industrienorm DIN 4102 « Brandverhalten von Baustoffen und Bauteilen », Ausgabe September 1977, sind Feuerwiderstandsklassen F30, F60 und F90 für Baustoffe der Klasse A1 und A2 definiert. Die Erfindung umfaßt damit vor allem auch nicht brennbare oder schwer entflammbare Papiere, Kartons und Pappen, die wenigstens die F30-Bedingung für Baustoffe der Klasse A1 und A2 erfüllen. Dabei lassen sich die erfindungsgemäßen Papiere, Kartons und Pappen falz- und rillfähig ausbilden, so daß sie zur Herstellung von brandsicheren Verpackungen, wie Kartons und Schachteln, geeignet sind. Die Werkstoffe lassen sich mit jedem bekannten Verfahren bedrucken. Durch entsprechende Oberflächenbehandlung sind den erfindungsgemäßen Papieren, Kartons und Pappen hinsichtlich ihrer Verwendbarkeit vor allem auf dem Bausektor, einschließlich dem Studio- und Ausstellungsbau sowie für Displays praktisch keine Grenzen gesetzt. Dabei können die erfindungsgemäßen Papiere, Kartons und Pappen aus anorganischen Fasern oder überwiegend aus solchen Fasern vorteilhafterweise asbestfaserfrei sein.

Dank der hohen Restfeuchtigkeitsgehalte der erfindungsgemäß in nicht brennbaren oder schwer entflammbaren Papieren, Kartons und Pappen verwendeten Calciumhydrosilikat-Füllstoffe besitzen derartige Papier- oder Pappenwerkstoffe vorteilhafterweise eine überraschend hohe Wärmedämmfähigkeit, wenn sie — wie z. B. bei Bränden — extrem hohen Temperaturen ausgesetzt werden. Das hängt wahrscheinlich damit zusammen, daß die erfindungsgemäßen Füllstoffe so lange eine hohe Wärmedämmfähigkeit besitzen, bis sie unter der Einwirkung hoher Temperaturen ihr gebundenes Wasser abgegeben haben und sich dabei wahrscheinlich mehr oder weniger von einer Xonotlit-Struktur in eine Wollastonit-Struktur umgewandelt haben.

Erfindungsgemäß lassen sich besonders gute Ergebnisse erzielen, wenn das kristallisierte Calciumhydrosilikat ein Längen-/Breitenverhältnis von 10 : 1 bis 200 : 1 aufweist, wenn das kristallisierte Calciumhydrosilikat außerdem Xonotlit-Struktur besitzt oder ein hydratisierter Wollastonit ist. Der nadelförmig kristallisierte Xonotlit oder bandförmig kristallisiertes Calciumhydrosilikat besitzt vorteilhafterweise auch ein Längen-/Breitenverhältnis von 100 : 1 bis 50 : 1 und weißt Breitenabmessungen von unter 1 μm auf.

## Patentansprüche

1. Füllstoff für einen papier-, karton- oder pappenartigen Werkstoff, hergestellt durch Blattbildung aus einer wässrigen faserhaltigen Stoffaufschlämmung auf einem Sieb mit anschließender Trocknung, wobei die Gefügefestigkeit eines Blattes abhängig ist von Wasserstoffbrücken, die sich bei der Entwässerung zwischen den einzelnen Fasern bilden, dadurch gekennzeichnet, daß der Füllstoff aus kristallinem Calciumsilikat verschiedener Hydratisationsstufen mit Wasserstoffbrückenbindungsfähigkeit und faser- oder nadelförmig kristallisiertem Calciumsulfat-Anhydrit oder -Dihydrat besteht.

2. Füllstoff nach Anspruch 1, dadurch gekennzeichnet, daß ein relativ geringer Anteil des Füllstoffes aus wenigstens einem aufweitbaren, quellfähigen Schichtsilikat der Gruppe der
Smectite,
Vermiculite,
Illite
besteht.

3. Füllstoff für einen papier-, karton- oder pappenartigen Werkstoff, hergestellt durch Blattbildung aus einer wässrigen faserhaltigen Stoffaufschlämmung auf einem Sieb mit anschließender Trocknung, wobei die Gefügefestigkeit eines Blattes abhängig ist von Wasserstoffbrücken, die sich bei der Entwässerung zwischen den einzelnen Fasern bilden, dadurch gekennzeichnet, daß der Füllstoff aus kristallinem Calciumsilikat verschiedener Hydratisationsstufen mit Wasserstoffbrückenbindungsfähigkeit und wenigstens einem aufweitbaren quellfähigen Schichtsilikat der Gruppe der
Smectite,
Vermiculite,
Illite
besteht.

4. Füllstoff nach Anspruch 2 oder 3, dadurch gekennzeichnet, daß das Schichtsilikat ein Montmorillonit (Bentonit) ist.

5. Füllstoff nach Anspruch 2 oder 3, dadurch gekennzeichnet, daß der Anteil der Schichtsilikate kleiner als 2 Gew.-%, vorzugsweise um 1 Gew.-% ist.

6. Füllstoff nach einem oder mehreren der vorstehenden Ansprüche, dadurch gekennzeichnet, daß das kristallisierte Calciumhydrosilikat ein hohes Längen-/Breitenverhältnis sowie eine Breitenabmessung unter 1 μm besitzt.

7. Füllstoff nach Anspruch 6, dadurch gekennzeichnet, daß das kristallisierte Calciumhydrosilikat ein Längen-/Breitenverhältnis von 10 : 1 bis 200 : 1 aufweist.

8. Füllstoff nach Anspruch 6, dadurch gekennzeichnet, daß das kristallisierte Calciumhydrosilikat Xonotlit-Struktur besitzt.

9. Füllstoff nach Anspruch 6, dadurch gekennzeichnet, daß das Calciumhydrosilikat ein hydratisierter Wollastonit ist.

10. Füllstoff nach Anspruch 8 oder 9, dadurch gekennzeichnet, daß das nadelförmig kristallisierte Xonotlit oder bandförmig kristallisiertes Calciumhydrosilikat ein Längen-/Breitenverhältnis von 100 : 1 bis 50 : 1 und Breitenabmessungen unter 1 μm aufweist.

11. Füllstoff nach einem der Ansprüche 1 bis 10, dadurch gekennzeichnet, daß das Calciumhydrosilikat synthetisch im Hydrothermalprozeß hergestellt ist und im wesentlichen die Formel $6CaO \cdot 6 SiO_2 \cdot nH_2O$ bzw. $Ca_6[(OH)_2Si_6O_{17}] \cdot nH_2O$ besitzt, wobei die Restfeuchtigkeit 2 bis etwa 50 Gew.-% $H_2O$, vorzugsweise um 35 bis 50 Gew.-% $H_2O$ beträgt.

12. Füllstoff nach einem der vorstehenden Ansprüche für einen papier-, karton- oder pappenartigen Werkstoff, der ausschließlich oder im wesentlichen aus anorganischen Fasern besteht, dadurch gekennzeichnet, daß die anorganischen Fasern aus synthetischen Magnesium-Aluminiumsilikat-Fasern bestehen.

13. Füllstoff nach Anspruch 8, dadurch gekennzeichnet, daß die im Hydrothermalprozeß hergestellten Magnesium-Aluminiumsilikat-Fasern im Mittel etwa aus 45 % $SiO_2$, 20 % CaO, 15 % MgO, 12 % $Al_2O_3$, 3 % NaO und 5 % Fe bestehen.

14. Füllstoff nach Anspruch 12 oder 13, dadurch gekennzeichnet, daß die Fasern eine Länge von 1 bis 5 mm bei einem mittleren Durchmesser von 3 bis 5 μm aufweisen.

15. Füllstoff nach Anspruch 13, dadurch gekennzeichnet, daß ein Anteil der anorganischen Fasern aus Glasfasern besteht.

16. Füllstoff nach Anspruch 14, dadurch gekennzeichnet, daß die Glasfasern eine Länge von 3 bis 12 mm, vorzugsweise 3 bis 6 mm und einen mittleren Durchmesser von 10 bis 14 μm, vorzugsweise 12 bis 13 μm aufweisen.

## Claims

1. Filler combination for a paper- or cardboard-type material manufactured by forming sheets from a suspension of aqueous and fiber-containing materials on a sieve followed by dehydration, with the rigidity of the texture depending on the hydrogen bridges arising between the individual fibers during dehydration, characterized in that the filler combination comprises crystalline calcium hydrosilicates of different hydration stages which are able to bond hydrogen bridges and fiber- or needle-like crystallized anhydrite or dehydrate of calcium sulfate.

2. Filler combination according to claim 1, characterized in that a relatively small quantity of the filler combination consists of at least one splayable, swellable layer silicate of the groups of the
smectites,
vermiculates,
illites.

3. Filler combination for a paper- or cardboard-type material manufactured by forming sheets from a suspension of aqueous and fiber-containing materials on a sieve followed by dehydration, with the rigidity of the texture depending on the hydrogen bridges arising between the individual fibers during dehydration, characterized in that the filler combination comprises crystalline calcium hydrosilicates of different hydration stages which are able to bond hydrogen bridges and at least one splayable, swellable layer silicate of the groups of the
smectites,
vermiculites,
illites.

4. Filler combination according to claim 2 or 3, characterized in that the layer silicate is a montmorillonite (bentonite).

5. Filler combination according to claims 2 or 3, characterized in that the portion of layer silicates is less than 2 % by weight, preferably around 1 % by weight.

6. Filler combination according to one or several of the preceding claims, characterized in that the crystallized calcium hydrosilicate has a large length/width ratio as well as a width of below 1 μm.

7. Filler combination according to claim 6, characterized in that the crystallized calcium hydrosilicate has a length/width ratio ranging from 10 : 1 to 200 : 1.

8. Filler combination according to claim 6, characterized in that the crystallized calcium hydrosilicate has a xonolith structure.

9. Filler combination according to claim 6, characterized in that the calcium hydrosilicate is a hydrated wollastonite.

10. Filler combination according to claims 8 or 9, characterized in that the acicular crystals of xonolite or the ribbon-like crystals of calcium hydrosilicate have a length/width ratio ranging from 100 : 1 to 50 : 1 and widths of below 1 μm.

11. Filler combination according to one of claims 1 thru 10, characterized in that the calcium hydrosilicate is manufactured synthetically in the hydrothermal procedure and in the main has the formula $6 CaO \cdot 6 SiO_2 \cdot nH_2O$ or $Ca_6[(OH)_2Si_6O_{17}] \cdot nH_2O$, with the residual moisture being 2 to about 50 % by weight $H_2O$, preferably around 35 to 50 % by weight.

12. Filler combination according to one of the preceding claims for a paper- or cardboard-type material, which exclusively or mainly consists of anorganic fibers, characterized in that the anorganic fibers are synthetic fibers of magnesium and aluminum.

13. Filler combination according to claim 8, characterized in that the fibers of magnesium and aluminum manufactured in the hydrothermal procedure on average consist of about 45 % of $SiO_2$, 20 % CaO, 15 % MgO, 12 % $Al_2O_3$, 3 % NaO and 5 % Fe.

14. Filler combination according to claims 12 or 13, characterized in that the fibers have a length of 1 to 5 mm with a mean diameter of 3 to 5 μm.

15. Filler combination according to claim 13, characterized in that one portion of the anorganic fibers consists of glass fibers.

16. Filler combination according to claim 14, characterized in that the glass fibers have a length of 3 to 12 mm, preferably 3 to 6 mm and a mean diameter of 10 to 14 $\mu$m, preferably 12 to 13 $\mu$m.

## Revendications

1. Charge pour un matériau de type papier ou carton, produit par formation d'une feuille à partir d'une suspension aqueuse de pâte contenant des fibres par égouttage, sur une toile, avec séchage subséquent, la solidité de texture d'une feuille étant fonction des ponts hydrogène qui se sont formés entre les fibres individuelles lors de l'élimination de l'eau, ladite charge étant caractérisée en ce qu'elle est constituée par du silicate de calcium cristallisé présentant divers degrés d'hydratation et une aptitude à former des ponts hydrogène, et par du sulfate de calcium anhydrité ou dihydraté cristallisé sous forme de fibres ou d'aiguilles.

2. Charge selon la revendication 1, caractérisée en ce qu'une proportion relativement faible de ladite charge est constituée par au moins un silicate stratifié expansible, gonflable, du groupe des
   smectites,
   vermiculites,
   illites.

3. Charge pour un matériau de papier ou carton, produit par formation d'une feuille à partir d'une suspension aqueuse de pâte contenant des fibres, sur une toile, avec séchage subséquent, la solidité de texture d'une feuille étant fonction des ponts hydrogène qui se sont formés entre les fibres individuelles lors de l'élimination de l'eau, ladite charge étant caractérisée en ce qu'elle est constituée par du silicate de calcium cristallisé présentant divers degrés d'hydratation et une aptitude à former des ponts hydrogène, et par au moins un silicate stratifié expansible, gonflable, du groupe des
   smectites,
   vermiculites,
   illites.

4. Charge selon la revendication 2 ou 3, caractérisée en ce que le silicate stratifié est une montmorillonite (bentonite).

5. Charge selon la revendication 2 ou 3, caractérisée en ce que la proportion de silicate stratifié est inférieure à 2 % en poids, de préférence d'environ 1 % en poids.

6. Charge selon l'une ou plusieurs des revendications précédentes, caractérisée en ce que l'hydrosilicate cristallisé présente un rapport longueur/largeur élevé ainsi qu'une largeur inférieure à 1 $\mu$m.

7. Charge selon la revendication 6, caractérisée en ce que l'hydrosilicate de calcium cristallisé présente un rapport longueur/largeur de 10 : 1 à 200 : 1.

8. Charge selon la revendication 6, caractérisée en ce que l'hydrosilicate de calcium cristallisé présente une structure de xonotlite.

9. Charge selon la revendication 6, caractérisée en ce que l'hydrosilicate de calcium est une wollastonite hydratée.

10. Charge selon la revendication 8 ou 9, caractérisée en ce que le xonotlite cristallisé en aiguilles, ou l'hydrosilicate de calcium cristallisé sous forme de ruban, présentent un rapport longueur/largeur de 100 : 1 à 50 : 1 et une largeur inférieure à 1 $\mu$m.

11. Charge selon l'une des revendications 1 à 10, caractérisée en ce que l'hydrosilicate de calcium est produit par voie synthétique, au moyen d'un procédé hydrothermique, et répond essentiellement à la formule 6 CaO, 6 SiO$_2$, nH$_2$O notamment Ca$_6$ [(OH)$_2$Si$_6$O$_{17}$], nH$_2$O, l'humidité résiduelle étant environ de 2 à 50 % en poids de H$_2$O, de préférence environ de 35 à 50 % en poids de H$_2$O.

12. Charge selon l'une des revendications précédentes, pour un matériau de type papier ou carton, qui est constituée exclusivement ou essentiellement par des fibres minérales, caractérisée en ce que les fibres minérales sont constituées par des fibres synthétiques de silicate de magnésium et d'aluminium.

13. Charge selon la revendication 8, caractérisée en ce que les fibres de silicate de magnésium et d'aluminium produites par un procédé hydrothermique sont constituées en moyenne par environ 45 % de SiO$_2$, 20 % de CaO, 15 % de MgO, 12 % d'Al$_2$O$_3$, 3 % de NaO et 5 % de Fe.

14. Charge selon la revendication 12 ou 13, caractérisée en ce que les fibres présentent une longueur de 1 à 5 mm pour un diamètre moyen de 3 à 5 $\mu$m.

15. Charge selon la revendication 13, caractérisée en ce qu'une partie des fibres minérales est constituée par des fibres de verre.

16. Charge selon la revendication 14, caractérisée en ce que les fibres de verre présentent une longueur de 3 à 12 mm, de préférence de 3 à 6 mm, et un diamètre moyen de 10 à 14 $\mu$m, de préférence 12 à 13 $\mu$m.